# EUROPÄISCHE PATENTANMELDUNG

(11) **EP 1 074 513 A2**
(43) Veröffentlichungstag der Anmeldung: **07.02.2001**
(21) Anmeldenummer: 00116460.7
(22) Anmeldetag: 29.07.2000
(51) Int. Cl.: C01B 33/18, C03B 19/12, C03B 19/10, C03B 19/06, C03B 19/01, C03C 1/02, C03C 1/00, C09C 1/30, C09G 1/02, C08K 3/36, C04B 35/14, C04B 35/626, C04B 35/624, C03C 17/02, C03C 17/04, C03C 25/10, C03C 25/42, C03B 8/02, C03B 19/09, C03B 37/012, C03B 37/016

(54) **Sinterwerkstoffe und deren Herstellungsverfahren und Verwendungen, Dispersionen von Siliciumdioxid-Granulaten und deren Verwendungen, sowie Verwendungen von Siliciumdioxid-Granulaten**

(30) Priorität: 03.08.1999 DE 19936478
(71) Anmelder: Degussa-Hüls Aktiengesellschaft, 60287 Frankfurt am Main (DE)
(72) Erfinder: Mangold, Helmut, Dr., 63517 Rodenbach (DE); Meyer, Jürgen, Dr., 63811 Stockstadt/Main (DE); Schneider, Gerrit, Dr., 63450 Hanau (DE)

(57) **Zusammenfassung**

Sinterwerkstoffe, insbesondere Sintergläser, hergestellt aus pyrogen erzeugtem Siliciumdioxid, das innerhalb eines Verdichtungsschrittes zu Siliciumgranulaten verarbeitet wurde, sowie die Verwendung derartiger Granulate zur Herstellung von u.a. Glasformkörpern. Dispersionen von derartigen Granulaten sowie deren Verwendungen sind auch offenbart. Verfahren zur Herstellung von Sinterwerkstoffen durch Formgebung der Granulate (mit oder ohne Dispersion) und thermische Nachbehandlung sind auch offenbart.

## Beschreibung

Die Erfindung betrifft Sinterwerkstoffe (insbesondere Sintergläser), Verfahren zur Herstellung von Sinterwerkstoffen aus pyrogen hergestelltem Siliciumdioxid, das mittels eines nachgeschalteten Verdichtungsschrittes zu Siliciumdioxidgranulaten verarbeitet wurde, sowie die Verwendung entsprechender Siliciumdioxidgranulate zur Herstellung von Sinterwerkstoffen.

Es ist bekannt, Siliciumalkoxidlösungen durch Einwirken einer Saure zu Gelkörpern umzusetzen, die getrocknet und anschließend einem Sinterschritt unterworfen werden (DE 30 01 792 C2). Derartige Verfahren werden allgemein als 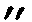 Sol-Gel-Verfahren" bezeichnet. Auf diesem Wege erzeugte Gläser sollen erfindungsgemäß zur Herstellung von Vorformkörpern zur späteren Weiterverarbeitung zu Lichtleitfasern dienen.

Es ist weiterhin bekannt, nanoskalige Pulver, wie zum Beispiel pyrogen erzeugtes Siliciumdioxid, zur Herstellung von Sinterglaskörpern zu verwenden (US-A 5,379,364). Dabei wird eine Ausgangskieselsäure mit einer Oberfläche von weniger als 100 m²/g eingesetzt und eine Dispersion mit einem Feststoffanteil von mehr als 30 Gew.% hergestellt. Diese Dispersion wird nach dem Umfüllen in eine Form durch Herabsetzen des pH-Wertes geliert. Der Gelkörper wird anschließend zu einem Grünkörper getrocknet, dieser einem Reinigungsschritt unterzogen und danach gesintert. Im Unterschied zum in DE 30 01 792 C2 erläuterten Verfahren handelt es sich bei derartigen Verfahren wie US-A 5,379,364 um sogenannte 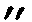 kolloidale Sol-Gel-Verfahren".

Bekannte Verfahren, in denen Glasformkörper unter ausschließlicher Verwendung von Siliciumalkoxidlösungen entsprechend dem 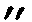 Sol-Gel-Verfahren" hergestellt werden, haben den Nachteil, daß der Gelkörper während des Trocknungs- und während des Sinterprozesses stark schrumpft. Dieser Schrumpf kann zwischen 60 und über 80% der ursprünglichen Ausmaße des Gelkörpers betragen. In Folge dieses starken Trocken- und Sinterschrumpfes entstehen feinste Blasen und Risse innerhalb des erzeugten Glaskörpers, die die Produkteigenschaften negativ beeinträchtigen. So wird durch derartige Blasen und Risse die optische Transmission derartiger Glasformkörper stark herabgesetzt und die optische Homogenität beeinträchtigt. Aufgrund der entsprechend hohen optischen Dämpfung können derartige Glasformkörper nicht für die Herstellung hochwertiger Lichtleitfasern eingesetzt werden. Weiterhin haben die bekannten 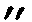 Sol-Gel-Verfahren" den Nachteil, das der Gelkörper extrem feine Kapillaren und Poren besitzt. Die im Gelkörper enthaltene Flüssigkeit übt während des Trocknungsprozesses auf die Kapillaren einen hohen hydrodynamischen Druck aus, der beim Trocknungsprozeß des Gelkörpers ebenfalls zum Auftreten ultrafeiner Risse, Sprünge oder Blasen führt.

Die bekannten 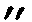 kolloidale Sol-Gel-Verfahren" weisen gegenüber den 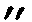 Sol-Gel-Verfahren" den Vorteil eines etwas verringerten Trocken- und Sinterschrumpfes auf. Ursache für diesen verringerten Schrumpf ist die Verwendung von pyrogen erzeugtem Siliciumdioxid, welches höhere Füllgrade dieses Oxides innerhalb von Dispersionen ermöglicht, die für die Herstellung von Sintergläsern benutzt werden. Trotzdem weisen auch die bekannten 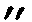 kolloidalen Sol-Gel-Verfahren" einen erheblichen Trocken- und Sinterschrumpf auf. Der Schrumpf beträgt bei diesen Verfahren immer noch zwischen 35 bis 50% der Ausmaße des Gelkörpers vor der Trocknung. Eine weitere Verbesserung der optischen Eigenschaften von auf diesem Wege hergestellten Sintergläsern setzt jedoch die nochmalige Erhöhung der Füllgrade des Siliciumdioxidpulvers innerhalb des pulvertechnologischen Herstellprozesses voraus. Diese benötigten hohen Füllgrade können jedoch mit bekannten pyrogen erzeugten Siliciumdioxidpulvern mit geringer Verdichtung nicht mehr erreicht werden. Das hat zur Folge, daß der daraus hergestellte Vorformkörper für die Lichtleitfaserherstellung eine schlechte optische Transparenz aufweist, als dies für das endgültige Produkt wünschenswert wäre.

Die bekannten 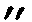 kolloidale Sol-Gel-Verfahren" bewirken gegenüber den 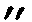 Sol-Gel-Verfahren" eine etwas verbesserte Kapillar- und Porenstruktur des Gelkörpers. Bei der Trocknung von mittels 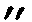 kolloidalen Sol-Gel-Verfahren" hergestellten Gelkörpern entstehen aus diesem Grund bereits weniger interne ultrafeine Risse, Sprünge oder Blasen als bei der Trocknung von mittels einfacher 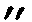 Sol-Gel-Verfahren" hergestellten Gelkörpern. Trotzdem ist es wünschenswert, die Kapillar- und Porenstruktur weiter zu verbessern.

Es bestand somit die Aufgabe, Sinterwerkstoffe mit verbesserter Kappillar- und Porenstrucktur zu entwickeln.

Gegenstand der Erfindung sind Sinterwerkstoffe, insbesondere Sintergläser, die mittels eines Formgebungs- oder Verdichtungsverfahrens, gegebenenfalls einer anschließenden Reinigung und gegebenenfalls einem sich anschließenden Sinterverfahren hergestellt werden und dadurch gekennzeichnet sind, daß **entweder** zu ihrer Herstellung pyrogen hergestelltes Siliciumdioxid verwendet wird, das mittels eines nachgeschalteten Verdichtungsschritts gemäß DE 196 01 415 A1 zu Granulaten verdichtet wurde und eine Stampfdichte von 150 g/l bis 800 g/l, vorzugsweise 200 bis 500 g/l, eine Granulatkorngröße von 10 bis 800 µm und eine BET- Oberfläche von 10 bis 500 m²/g, vorzugsweise 20 bis 130 m²/g besitzt, **oder** zu ihrer Herstellung Granulate nach DE 196 01 415 A1 auf Basis von pyrogen hergestelltem Siliciumdioxid mit den folgenden physikalisch-chemischen Daten verwendet werden: Mittlerer Korndurchmesser: 25 bis 120 µm, BET-Oberfläche: 40 bis 400 m²/g, Porenvolumen: 0,5 bis 2,5 ml/g, Porenverteilung: keine Poren < 5nm, nur Meso- und Makroporen, pH-Wert: 3,6 bis 8,5, Stampfdichte: 220 bis 700 g/l.

Beispiele für derartige Herstellverfahren sind das Erzeugen einer wäßrigen Granulatdispersion, das Umfüllen dieser Dispersion in eine Form und das Gelieren der Dispersion zu einem Gelkörper. Dieser kann durch einen Trocken- und einen Sinterprozeß zu Glasformkörpern von hoher Qualität verarbeitet werden. Ein weiteres Beispiel für derartige Verfahren ist das Trockenpressen von hochverdichtetem pyrogen hergestelltem Siliciumdioxidgranulat zu einem festen Formkörper und anschließendes Sintern dieses Formkörpers zu Sinterglas.

Gegenstand der Erfindung sind oben erwähnte Sinterwerkstoffe, die dadurch gekennzeichnet sind, daß die erwähnten Granulate mittels eines Verfahrens der folgenden Art zum Sinterwerkstoff verarbeitet werden:
a) Herstellung einer Dispersion aus 10 Gew.% bis 85 Gew.%, vorzugsweise 25 Gew.% bis 70 Gew.% Feststoffanteil der Granulate und einer polaren oder unpolaren anorganischen oder organischen Flüssigkeit, vorzugsweise Wasser, Ethanol oder aliphatische Kohlenwasserstoffe; danach Umfüllen der Dispersion in eine Form oder Beschichtung von Oberflächen mit dieser Dispersion, Einleitung des Gelierens der Dispersion und Trocknung des Gelkörpers oder der gelkörperartigen Beschichtung. Der nach dem Trocknungsvorgang entstandene Grünkörper oder die grünkörperartige Beschichtung kann gegebenenfalls mit gasförmigen Substanzen, wie Chlor oder Thionylchlorid, bei Temperaturen von 700 bis 1000 °C gereinigt und danach gegebenenfalls durch einen Sinterschritt bei einer Temperatur von 1000 bis 1800 °C, vorzugsweise von 1100° bis 1600°C so gesintert werden, daß der entstehende Sinterkörper oder die Sinteroberfläche völlig dichtgesintert oder noch teilweise porös ist.
b) Einbringen entsprechender Granulate ohne Zuhilfenahme einer Flüssigkeit in eine Form oder Aufbringen der Granulate auf eine Oberfläche, anschließend gegebenenfalls ein weiterer Verdichtungsschritt, innerhalb dessen der Formkörper oder die Schicht unter hohem äußerem mechanischen Druck (Preßdruck zum Beispiel 1 und 120 MPa) in Gegenwart von Atmosphärendruck oder bei vermindertem Druck verpreßt und weiter verdichtet werden. Der nach dem Preßvorgang entstandene Formkörper oder die verdichtete Beschichtung kann gegebenenfalls mit gasförmigen Substanzen, wie Chlor oder Thionylchlorid, bei Temperaturen von 700 bis 1000 °C gereinigt und durch einen Sinterschritt bei einer Temperatur zwischen 1000 bis 1800 °C, vorzugsweise von 1100° bis 1600°C so gesintert werden, daß der entstehende Sinterkörper oder die Sinteroberfläche völlig dichtgesintert oder noch teilweise porös ist.
c) Aufbringen von entsprechenden Granulaten auf Formkörper und Oberflächen durch thermische oder andere hochenergetische Verfahren, wie zum Beispiel Flammspritzen, Plasmabeschichtung, Lasersintern oder Mikrowellensinterung, innerhalb derer ein fester Formkörper oder eine feste Beschichtung ensteht und der resultierende Sinterkörper oder die Sinteroberfläche völlig dichtgesintert oder noch teilweise porös ist.

Gegenstand der Erfindung sind ebenfalls Werkstoffe oder Gläser, welche dadurch gekennzeichnet sind, daß bei der Herstellung der Werkstoffe oder Gläser die erfindungsgemäßen Granulate mittels Einwirkung von thermischer, elektrischer oder elektromagnetischer Energie, so zum Beispiel durch Brenner, Plasmafackeln oder Mikrowellenstrahlung **entweder** vor dem Erhitzen oder im Anschluß daran in eine beliebige Form gebracht und dann so gesintert werden, daß der entstehende Sinterkörper oder die Sinteroberfläche völlig dichtgesintert oder noch teilweise porös ist **oder** teilweise oder vollständig aufgeschmolzen werden, vor dem Erhitzen oder im Anschluß daran in eine beliebige Form gebracht werden und in dieser Form erstarren oder zum Beschichten anderer Werkstoffe, wie zum Beispiel Glas oder Metall, genutzt werden und gegebenenfalls anschließend nachbehandelt werden.

Gegenstand der Erfindung sind Gläser, die dadurch gekennzeichnet sind, daß die Sinterung zu einem transparenten Glaskörper oder einer transparenten Glasschicht innerhalb des Viskositätsbereiches des Glases zwischen 10⁸ bis 10¹² dPas, bevorzugt jedoch zwischen 10¹⁰ und 10¹¹ dPas erfolgt.

Gegenstand der Erfindung sind Gläser die dadurch gekennzeichnet sind, daß die Gläser mindestens wasserbeständig nach der hydrolytischen Klasse 2, vorzugsweise wasserbeständig nach der hydrolytischen Klasse 1, sind.

Gegenstand der Erfindung sind Gläser die dadurch gekennzeichnet sind, daß die Eigenschaften der aus entsprechenden, feinsten Pulverteilchen gesinterten oder erschmolzenen Gläser übereinstimmend mit den Eigenschaften eines Glases mit identischer chemischer Zusammensetzung sind, welches über einen konventionellen Schmelzprozeß ohne die Verwendung der erwähnten Granulate hergestellt wurde. Die Herstellung derartiger Sintergläser erfordert deutlich niedrigere Sintertemperaturen verglichen mit der Schmelztemperatur, die zur Herstellung eines Glases mit identischer Zusammensetzung innerhalb eines konventionellen Schmelzprozesses notwendig ist.

Gegenstand der Erfindung sind weiterhin Dispersionen, die zur Herstellung von Sinterwerkstoffen verwendet werden und durch folgende Eigenschaften gekennzeichnet sind:
a) Feststoffanteile der erfindungsgemäßen Granulate von 10 Gew.% bis 85 Gew.%, vorzugsweise 25 Gew.% bis 70 Gew.% innerhalb einer Dispersion mit einer polaren oder unpolaren anorganischen oder organischen Flüssigkeit, vorzugsweise Wasser, Ethanol oder aliphatische Kohlenwasserstoffe; oder
b) Feststoffanteile der erfindungsgemäßen Granulate von 10 Gew.% bis 85 Gew.%, vorzugsweise 25 Gew.% bis 70 Gew.% innerhalb einer wäßrigen Dispersion, die einen pH-Wert zwischen pH = 1 und 6 oder zwischen pH = 8 und 12 aufweist und mit organischen Säuren, wie zum Beispiel Ameisensäure, Citronensäure oder Trichloressigsäure, mit anorganischen Säuren, wie zum Beispiel Salpetersäure, Phosphorsäure oder Schwefelsäure, mit organischen Basen, wie zum Beispiel Triethylamin, Pyridin oder Tetramethylammoniumhydroxid, und mit anorganischen Basen, wie zum Beispiel Kaliumhydroxid, Calciumhydroxid oder Ammoniumhydroxid auf den entsprechenden pH-Wert eingestellt wird; oder
c) Feststoffanteile der erfindungsgemäßen Granulate von 10 Gew.% bis 85 Gew.%, vorzugsweise 25 Gew.% bis 70 Gew.% innerhalb einer wäßrigen Dispersion, die einen pH-Wert zwischen pH = 1 und 6 oder zwischen pH = 8 und 12 aufweist mit organischen oder anorganischen Säuren oder Basen und auf den entsprechenden pH-Wert eingestellt wird und weitere Zusatzstoffe enthält, die erhöhte Granulatanteile und eine verbesserte Dispergierbarkeit ermöglichen, wie zum Beispiel Polymere oder ionische Verbindungen, die zu einer sterischen oder ionischen Stabilisierung der Dispersion beitragen und ein Absetzen von Feststoffanteilen verringern oder unterbinden und/oder ein vorzeitiges Gelieren verhindern, oder
d) Feststoffanteile der erfindungsgemäßen Granulate von 10 Gew.% bis 85 Gew.%, vorzugsweise 25 Gew.% bis 70 Gew.% innerhalb einer wäßrigen Dispersion, die einen pH-Wert zwischen pH = 1 und 6 oder zwischen pH = 8 und 12 aufweist und mit organischen oder anorganischen Säuren oder Basen auf den entsprechenden pH-Wert eingestellt wird und weitere Zusatzstoffe enthäalten kann, die ein verbessertes Dispergieren, Gelieren, Trocknen und Reinigen sowie Sintern des späteren Sinterwerkstoffes ermöglichen, wie zum Beispiel Metallalkoxide der Formel Me(OR)ₓ, wobei Me für ein Metall, vorzugsweise für Silicium, R für eine Alkylgruppe steht und 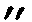 x" der Wertigkeit des Metallions entspricht. Derartige Dispersionen können auch mit anderen organischen Bindermaterialien wie zum Beispiel Polymeren oder Harzen versetzt werden, die ebenfalls eine verbesserte Produktqualität des Sinterwerkstoffes ermöglichen wie zum Beispiel Verbesserung der Porenfreiheit oder der optischen Transmission oder einen erleichterten Prozeß mit höheren Füllgraden und geringerem Trocken- /Sinterschrumpf, oder
e) Feststoffanteile der erfindungsgemäßen Granulate von 1 Gew.% bis 75 Gew.%, vorzugsweise 5 Gew.% bis 50 Gew.% innerhalb einer wäßrigen Dispersion, die einen pH-Wert zwischen pH = 1 und 6 oder zwischen pH = 8 und 12 besitzt und auf den entsprechenden pH-Wert eingestellt wird mit organischen oder anorganischen Säuren oder Basen und ggf. weitere Zusatzstoffe enthalten kann, wie zum Beispiel Metallalkoxide der Formel Me(OR)ₓ, vorzugsweise Tetraethoxysilan. Derartigen Dispersionen können pyrogen erzeugte Oxide in einem Gewichtsanteil zwischen 1 und 65 Gew.%, vorzugsweise 1 und 50 Gew.% zugesetzt werden wie zum Beispiel Siliciumdioxid, Titandioxid, Aluminiumoxid, Zirkondioxid oder Mischoxide der entsprechenden Metalle. Die entsprechenden pyrogenen Oxide können der Dispersion sowohl unverdichtet als auch nach Durchführung einer andersartigen Vorverdichtung zugesetzt werden, als in DE 196 01 415 A1 beschrieben.
f) Feststoffanteile der erfindungsgemäßen Granulate von 1 Gew.% bis 75 Gew.%, vorzugsweise 5 Gew.% bis 50 Gew.% innerhalb einer wäßrigen Dispersion, die einen pH-Wert zwischen pH = 1 und 6 oder zwischen pH = 8 und 12 besitzt und auf den entsprechenden pH-Wert eingestellt wird mit organischen oder anorganischen Säuren oder Basen und weitere Zusatzstoffe enthalten kann, die ein verbessertes Dispergieren, Gelieren, Trocknen und Reinigen sowie Sintern des späteren Sinterwerkstoffes ermöglichen, wie z.B. Metallalkoxide der Formel Me(OR)ₓ, vorzugsweise Tetraethoxysilan. Derartige Dispersionen können erfindungsgemäß mit Salzen oder Oxiden eines Metalloids und/oder Metalls versetzt werden.

Gegenstand der Erfindung ist die Verwendung der erfindungsgemäßen Granulate aus pyrogen erzeugtem Siliciumdioxid zur Herstellung von Sinterwerkstoffen, insbesondere Sintergläsern, dadurch gekennzeichnet, daß die eingesetzten Granulate folgende Eigenschaften besitzen:
a) nach einem Verdichtungsschritt gemäß DE 196 01 415 A1 eine Stampfdichte von 150 g/l bis 800 g/l, vorzugsweise 200 bis 500 g/l, eine Granulatkorngröße von 10 bis 800 µm und eine BET- Oberfläche von 10 bis 500 m²/g, vorzugsweise 20 bis 130 m²/g, oder
b) nach einem Verdichtungsschritt gemäß DE 196 01 415 A1 auf Basis von pyrogen hergestelltem Siliciumdioxid besitzen folgende physikalisch-chemische Daten:
   Mittlerer Korndurchmesser: 25 bis 120 µm, BET-Oberfläche: 40 bis 400 m²/g, Porenvolumen: 0,5 bis 2,5 ml/g, Porenverteilung: keine Poren < 5nm, nur Meso- und Makroporen, pH-Wert: 3,6 bis 8,5, Stampfdichte: 220 bis 700 g/l.

Gegenstand der Erfindung sind Verfahren zur Herstellung von Sinterwerkstoffen, insbesondere Sintergläsern, welche dadurch gekennzeichnet sind, daß man pyrogen hergestelltes Siliciumdioxid auf bekanntem Wege verdichtet und/oder granuliert, in eine Dispersion überführt, die Dispersion geliert, trocknet, den entstehenden Grünkörper reinigt sowie anschließend sintert. Das Gelieren kann zu unterschiedlichen Formen wie zum Beispiel Gelformkörpern, Gelfasern, gelierten Schichten oder Beschichtungen auf einem Substrat aus Glas oder Metall erfolgen. Diese Gelformkörper oder Gelschichten können nach ihrer Trocknung und Reinigung so gesintert werden, daß ein fester Formkörper oder eine feste Beschichtung ensteht, und der resultierende Sinterkörper oder die Sinteroberfläche völlig dichtgesintert oder noch teilweise porös ist.

Gegenstand der Erfindung sind Verfahren zur Herstellung von Sinterwerkstoffen, insbesondere Sintergläsern, welche dadurch gekennzeichnet sind, daß man pyrogen hergestelltes Siliciumdioxid auf bekanntem Wege verdichtet und/oder granuliert, und danach:
a) die Granulate ohne Zuhilfenahme einer Flüssigkeit in eine Form einbringt oder auf eine Oberfläche aufbringt, anschließend gegebenenfalls einen weiteren Verdichtungsschritt vornimmt, innerhalb dessen der Formkörper oder die Schicht unter hohem äußerem mechanischen Druck (Preßdruck zum Beispiel 1 bis 120 MPa) in Gegenwart von Atmosphärendruck oder bei vermindertem Druck verpreßt und weiter verdichtet werden. Der nach dem Preßvorgang entstandene Formkörper oder die verdichtete Beschichtung kann ggf. mit gasförmigen Substanzen wie Chlor oder Thionylchlorid, bei Temperaturen von 700 bis 1000 °C gereinigt und durch einen Sinterschritt bei einer Temperatur von 1000 bis 1800 °C, vorzugsweise von 1100° bis 1600°C so gesintert werden, daß der entstehende Sinterkörper oder die Sinteroberfläche völlig dichtgesintert oder noch teilweise porös ist;
b) Granulate auf Formkörper und Oberflächen durch thermische oder andere hochenergetische Verfahren aufbringt, wie zum Beispiel Flammspritzen, Plasmabeschichtung oder Mikrowellensinterung, innerhalb derer ein fester Formkörper oder eine feste Beschichtung entsteht und der resultierende Sinterkörper oder die Sinteroberfläche völlig dichtgesintert oder noch teilweise porös ist;
c) die Granulate mittels Einwirkung von thermischer, elektrischer oder elektromagnetischer Energie, so zum Beispiel durch Brenner, Plasmafackeln oder Mikrowellenstrahlung entweder vor dem Erhitzen oder im Anschluß daran in eine beliebige Form bringt und dann so sintert, daß der entstehende Sinterkörper oder die Sinteroberfläche völlig dichtgesintert oder noch teilweise porös ist oder aber die Granulate teilweise oder vollständig aufschmilzt, diese vor dem Erhitzen oder im Anschluß daran in eine beliebige Form bringt und in dieser Form erstarren läßt oder zum Beschichten anderer Werkstoffe, wie zum Beispiel Glas oder Metall, nutzt und sie gegebenenfalls anschließend nachbehandelt.

Gegenstand der Erfindung ist die Verwendung von Sinterwerkstoffen, insbesondere Sintergläsern oder Gläsern, für die Herstellung von Glasformkörpern wie zum Beispiel Lichtleitfaser-Vorformkörper (sogenannte 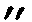 Overcladding Tubes" oder 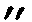 Core Rods"), optische Linsen, optische Gitter, Glastiegel (sogenannten 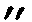 Crucibles"), elektrische Isolatoren, thermische Isolatoren, magnetische Isolatoren, Prismen, Behältnisse oder Apparate für die chemische oder pharmazeutische Industrie, Ingots, Formkörper für die Elektronikindustrie, Glasbarren als Rohstoff für die Weiterverarbeitung, Formkörper mit hohen Anforderungen an die Formtreue nach dem Prozeß.

Gegenstand der Erfindung ist die Verwendung von Sinterwerkstoffen insbesondere Sintergläsern oder Gläsern zum Beschichten von anderen Werkstoffen, wie Metall, Kunststoff oder Glas, mit Schichten aus Werkstoffen.

Gegenstand der Erfindung ist die Verwendung von Sinterwerkstoffen, insbesondere Sintergläsern oder Gläsern zum Herstellen von faserigen Werkstoffen oder Fasern.

Gegenstand der Erfindung ist die Verwendung von Granulaten für die Herstellung von Gläsern, insbesondere Sintergläsern, Keramiken, Verbundwerkstoffen, innerhalb derer die Granulate als Verstärkerfüllstoff wirken, als Verstärkerfüllstoffe in Metallen, Gläsern, Polymeren, Elastomeren, Lacken oder Flüssigkeiten.

Gegenstand der Erfindung ist die Verwendung von Dispersionen für die Herstellung von Gläsern, insbesondere Sintergläsern sowie zum Polieren von Halbleitermaterialien oder elektrischen Schaltkreisen.

In einer bevorzugten Ausführungsform der Erfindung kann man ein pyrogen hergestelltes Siliciumdioxid, das auf bekannten Wege gemäß DE 196 01 415 A1 granuliert beziehungsweise verdichtet wurde, zur Herstellung von Sinterwerkstoffen verwenden.

Das derartig verdichtete beziehungsweise granulierte Siliciumdioxid kann ein pyrogen hergestelltes Oxid mit einer BET-Oberfläche von 10 bis 500 m²/g, mit einer Stampfdichte von 150 bis 800 g/l und einer Granulatkorngröße von 10 bis 800 µm sein.

Erfindungsgemäß können auch Mischungen von verdichtetem und unverdichtetem Siliciumdioxid eingesetzt werden.

Das verdichtete pyrogene Siliciumdioxid kann in einer Dispersion mit Salzen oder Oxiden eines Metalloids und / oder Metalls versetzt werden.

Innerhalb der Dispersion können auch Mischungen von verdichteten und unverdichteten pyrogen hergestellten Siliciumdioxiden hergestellt werden.

Unter den Begriffen 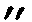 pyrogen erzeugte Kieselsäure", 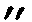 pyrogen erzeugtes Siliciumdioxid", 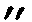 pyrogene Kieselsäure" oder 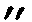 pyrogenes Siliciumdioxid" sollen nachfolgend feinstteilige, nanoskalige Pulver verstanden werden, die durch Umsetzung von gasförmigen Siliciumtetrachlorid, wie zum Beispiel Methyltrichlorsilan oder Siliciumtetrachlorid, in einer Hochtemperaturflamme hergestellt werden, wobei die Flamme mit Wasserstoff und Sauerstoff gespeist wird und ihr gegebenenfalls Wasserdampf zugeleitet werden kann.

Unter dem Begriff 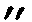 Granulat" sollen nachfolgend pyrogen erzeugte Siliciumdioxidpulver verstanden werden, die mittels des in DE 196 01 415 A1 beschriebenen Verdichtungsverfahrens oder analog zu diesem Verfahren hochverdichtet werden.

Unter dem Begriff 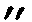 Dispersion" soll nachfolgend die homogene, das heißt extrem gleichmäßige Verteilung von unverdichtetem oder verdichtetem, das heißt 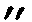 granuliertem" pyrogenen Siliciumdioxid in einer Flüssigkeit wie Wasser, Ethanol oder einem organischen Lösemittel verstanden werden.

Unter dem Begriff 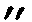 Sinterwerkstoff" oder 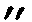 Sintergläser" sollen Werkstoffe oder Gläser verstanden werden, die aus feinstteiligen Pulvern mittels eines pulvertechnologischen Verfahrens und einem anschließenden Sinterschritt hergestellt werden.

Unter dem Begriff 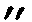 Sinterverfahren" sollen Verfahren verstanden werden, bei denen feinstteilige Pulver nach Anwendung von Wärme oder Hitze in feste Formkörper oder Schichten übergehen, die Porennur noch teilweise oder gar nicht mehr besitzen.

Unter dem Begriff 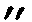 Gelkörper" sollen Formkörper verstanden werden, die nach dem Gelieren, d.h. nach dem Erstarren in nassem oder feuchtem Zustand auftreten und ein Skelett aus miteinander verbundenen Partikeln besitzen, das mit Flüssigkeit gefüllt ist.

Unter dem Begriff 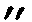 Grünkörper" sollen getrocknete Gelkörper verstanden werden, bei denen die Flüssigkeit aus dem Partikelskelett entfernt wurde und die eine hohe Porosität besitzen.

Vorteile der erfindungsgemäßen Sinterwerkstoffe, insbesondere Sintergläser sind die verbesserte optische Transparenz von Gläsern, verbesserte optische Homogenität, verbesserte chemische oder mechanische Beständigkeit von Schichten auf Substratmaterialien sowie die verbesserte chemische oder mechanische Belastbarkeit von Formkörpern oder Fasern gegenüber Werkstoffen oder Gläsern, die mit bisherigen 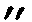 Sol-Gel-Verfahren", 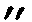 kolloidalen Sol-Gel-Verfahren" oder aber mittels eines konventionellen Schmelzprozesses hergestellt wurden.

Die Erfindung weist die folgenden Vorteile auf:

Mit den hochverdichteten Pulvern läßt sich ein höherer Füllgrad der Dispersionen erzeugen.
Der höhere Füllgrad der Dispersion bewirkt bei den daraus hergestellten Werkstoffen bessere Produkteigenschaften, wie zum Beispiel bessere Transparenz, durch eine geringere Anzahl von Blaseneinschlüssen und weniger Rissen.
Gleichzeitig ergeben sich durch die Verwendung hochverdichteter Pulver auch verfahrenstechnische Vorteile: So lassen sich beispielsweise Dispersionen mit Hilfe des hochverdichteten Pulvers einfacher herstellen. Die verfahrenstechnischen Vorteile bei der Verwendung höhergefüllter Dispersionen bestehen außerdem bei Sinterwerkstoffen in der Verringerung des Grünkörperschrumpfes oder des Sinterschrumpfes.
Die Verwendung derartiger Pulver bewirkt weitere verfahrenstechnische Vorteile. So kann durch die Beeinflussung der Feinteiligkeit der eingesetzten Pulver oder der Porosität des Grünkörpers die Sintertemperatur so abgesenkt werden, wie dies bei Verwendung anderer Pulver oder anderer Herstellprozesse nicht ohne Qualitätsverlust für die späteren Sinterwerkstoffe möglich ist.

Die erfindungsgemäße Verwendung der hochverdichteten Pulver führt außerdem zu einer besseren Verarbeitbarkeit innerhalb des pulvertechnologischen Herstellprozesses durch eine verbesserte Kapillar- und Porenstruktur des Gelkörpers.
Durch die Verwendung derartiger hochverdichteter Pulver kann somit die Trocknung des Gelkörpers vereinfacht und die spätere Produktqualität verbessert werden.

Die beschriebenen Sinterwerkstoffe, insbesondere Sintergläser oder Gläser können kommerziell genutzt werden zur Herstellung von Glasformkörpern wie zum Beispiel Lichtleitfaser-Vorformkörper (sog. 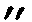 Overcladding Tubes" oder 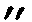 Core Rods"), optischen Linsen, optischen Gittern, Glastiegeln (sog. 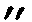 Crucibles"), elektrischen Isolatoren, thermischen Isolatoren, magnetischen Isolatoren, Prismen, Behältnissen oder Apparaten für die chemische oder pharmazeutische Industrie, Ingots, Formkörpern für die Elektronikindustrie, Glasbarren als Rohstoff für die spätere Weiterverarbeitung, Formkörpern mit hohen Anforderungen an die Formtreue nach dem Prozeß.

Derartige Sinterwerkstoffe können kommerziell überdies zum Beschichten von anderen Werkstoffen wie Metall, Kunststoff oder Glas mit Schichten aus Sinterglas oder Glas genutzt werden. Möglich ist die Verwendung der erfindungsgemäßen Sinterwerkstoffe, wie Sintergläser oder Gläser, auch zum Herstellen von faserigen Werkstoffen oder Fasern.

Die beschriebenen Granulate können für die Herstellung von Gläsern, insbesondere Sintergläsern, Keramiken, oder Verbundwerkstoffen genutzt werden, innerhalb derer die Granulate als Verstärkerfüllstoff wirken sowie als Verstärkerfüllstoffe in Metallen, Gläsern, Polymeren, Elastomeren, Lacken oder Flüssigkeiten dienen.

Die erfindungsgemäßen Dispersionen können zur Herstellung von Gläsern, insbesondere Sintergläsern, sowie zum Polieren von Halbleitermaterialien oder elektrischen Schaltkreisen eingesetzt werden.

### Beispiel 1

Ein pyrogen erzeugtes Siliciumdioxid mit einer BET-Oberfläche von 90 m²/g und einer Schüttdichte von 35 g/l und einer Stampfdichte von 59 g/l wird gemäß DE 196 014 14 A1 z einem Granulat verdichtet.

Das verdichtete Siliciumdioxid weist eine BET-Oberfläche von 90 m²/g und eine Stampfdichte von 246 g/l auf.

Anschließend werden 180 ml destilliertes Wasser in einem Gefäß vorgelegt und mit einer 30 Gew.% KOH-Lösung vor Beginn des Granulateintrages auf den pH-Wert 11 eingestellt. Anschließend werden mittels eines Dissolvers mit Dissolverscheibe nach und nach 120 g des versichteten Granulates in das Wasser eingetragen; die Drehzahl des Dissolvers beträgt dabei ca.1000 U/min. Nachdem das Granulat vollständig in die Dispersion eingearbeitet ist, wird die Dispersion mittels Dissolver noch ca. 30 min vordispergiert.

Nach dieser Zeit wird die vordispergierte Dispersion mittels eines Ultra-Turrax Rotor-Stator-Dispergieraggregates bei 10000 U/min ca. 120 min lang dispergiert und während dieser Dispergierung gekühlt. Nach dem Dispergierschritt wird eine Dispersion erhalten, die nach 24 Stunden Standzeit eine Viskosität im Bereich von 200 bis 250 mPas/s bei 50 U/min (gemessen mit einem Brookfield-Viskosimeter mit Spindel 2) aufweist. Der Feststoffgehalt beträgt 40 Gew.%, bezogen auf die Dispersion.

### Beispiel 2 (Vergleichsbeispeil)

Ein pyrogen erzeugtes Siliciumdioxid mit einer BET-Oberfläche von 90 m²/g und eine Stampfdichte von 59 g/l wird unverdichtet eingesetzt. Hierzu werden 180 ml destilliertes Wasser in einem Gefäß vorgelegt und mit einer 30 Gew.% KOH-Lösung vor Beginn des Pulvereintrages auf den pH-Wert 11 eingestellt. Anschließend wird mittels eines Dissolvers mit Dissolverscheibe nach und nach das unverdichtete Pulver in das Wasser eingetragen; die Drehzahl des Dissolvers beträgt dabei ca.1000 U/min. Von dem unverdichteten Siliciumdioxid lassen sich in die Dispersion jedoch nur 96 g einrühren ohne daß die Dispersion zu zähflüssig wird. Dies entspricht einem MAssenanteil vom 35 Gew.% innerhalb der Dispersion. Verglichen mit den 120 g gemäß dem erfindungsgemäßen Beispiel 1 ist dies eine deutlich geringere Menge. Nachdem das Pulver vollständig in die Suspension eingearbeitet wurde, wird die Dispersion mittels Dissolver noch ca. 30 min dispergiert.

Nach dieser Zeit wird die dispergierte Dispersion mittels eines Ultra-Turrax Rotor-Stator-Dispergieraggregates bei 10000 U/min ca. 120 min lang dispergiert und während dieser Dispergierung gekühlt. Nach dem Dispergierschritt wird eine Dispersion erhalten, die nach 24 Stunden Standzeit eine Viskosität im Bereich von 330 bis 460 mPas/s bei 50 U/min besitzt (gemessen mit einem Brookfield-Viskosimeter mit Spindel 2). Gegenüber Beispiel 1 mit einem Feststoffanteil von 40 Gew.% Granulat in der Dispersion lassen sich vom unverdichteten Pulver nur ca. 35 Gew.% in eine Dispersion überführen. Überdies ist die Viskosität der Dispersion deutlich höher, als gemäß Beispiel 1, was das kolloidale Sol-Gel-Verfahren erschwert.

### Beispiel 3 (gemäß Erfindung)

Ein pyrogen erzeugtes Siliciumdioxid mit einer BET-Oberfläche von 50 m²/g und einer Stampfdichte von 130 g/l wird nach DE 196 014 14 A1 zu einem Granulat verdichtet.

Das verdichtete Siliciumdioxid besitzt eine BET-Oberfläche von 50 m²/g und eine Stampfdichte von 365 g/l.

Anschließend werden 180 ml destilliertes Wasser in einem Gefäß vorgelegt und mit einer 30 Gew.% KOH-Lösung vor Beginn des Pulvereintrages auf den pH-Wert 11 eingestellt. Anschließend werden mittels eines Dissolvers mit Dissolverscheibe nach und nach 220 g des Granulates in das Wasser eingetragen; Die Drehzahl des Dissolvers beträgt dabei ca.1000 U/min. Nachdem das Granulat vollständig in die Dispersion eingearbeitet ist, wird die Dispersion mittels Dissolver noch ca. 30 min dispergiert.

Danach wird die Dispersion mittels eines Ultra-Turrax Rotor-Stator-Dispergieraggregates bei 10000 U/min ca. 120 min lang dispergiert und während dieser Dispergierung gekühlt. Die erhaltene Dispersion hat einen Feststoffanteil von ca. 55 Gew%.

### Beispiel 4 (Vergleichsbeispiel)

Ein pyrogen erzeugtes Siliciumdioxid besitzt eine BET-Oberfläche von 50 m²/g und eine Stampfdichte von 130 g/l. Dieses nicht hochverdichtete Pulver wird zum Vergleich mit Beispiel 3 eingesetzt.

Hierzu werden 180 ml destilliertes Wasser in einem Gefäß vorgelegt und mit einer 30 Gew.% KOH-Lösung vor Beginn des Pulvereintrages auf den pH-Wert 11 eingestellt.
Anschließend wird mittels eines Dissolvers mit Dissolverscheibe nach und nach das unverdichtete Pulver in das Wasser eingetragen; die Drehzahl des Dissolvers beträgt dabei ca.1000 U/min. Vom unverdichteten Pulver lassen sich in die Dispersion jedoch nur 180 g einrühren ohne daß die Dispersion zu zähflüssig wird. Dies entspricht einem Masseanteil von 50 Gew.% in der Dispersion. Verglichen mit den 220 g gemäß Beispiel 3 ist dies eine deutlich geringere Menge. Nachdem das Pulver vollständig in die Dispersion eingearbeitet ist, wird die Suspension mittels Dissolver noch ca. 30 min dispergiert.

Danach wird die vordispergierte Dispersion mittels eines Ultra-Turrax Rotor-Stator-Dispergieraggregates bei 10000 U/min ca. 120 min lang dispergiert und während dieser Dispergierung gekühlt. Gegenüber Beispiel 3, bei dem eine Dispersion mit einem Feststoffgehalt vom 55 Gew.% hergestellt wird, läßt sich mit dem unverdichteten Pulver nur eine Dispersion mit einem Feststoffgehalt vom ca. 50 Gew.% herstellen.

### Beispiel 5 (gemäß Erfindung)

Ein pyrogen erzeugtes Siliciumdioxid mit einer BET-Oberfläche von 90 m²/g und einer Schüttdichte von 35 g/l und einer Stampfdichte von 59 g/l wird nach DE 196 014 14 A1 verdichtet.

Das verdichtete Siliciumdioxid besitzt eine BET-Oberfläche von 90 m²/g und eine Stampfdichte von 246 g/l.

17,2 g dieses Pulvers werden mit 27 ml dest. Wasser und 2,57 ml Tetramethylammoniumhydroxid zu einer homogenen Dispersion angerührt, wie in den Beispiele 1 bis 4 beschrieben.

Nach Fertigstellen der Dispersion werden 1 ml Essigsäureethylester zugegeben und die Dispersion sofort in eine Form gegossen.

Nach 12 Minuten ist die Dispersion geliert, und der entstandene Gelkörper wird nach einer Stunde der Form entnommen und bei Raumtemperatur 6 Tage getrocknet.

Durch die Trocknung entsteht ein mikroporöser Grünkörper.

Dieser wird mittels Zonensinterung unter Vakuum bei 1400 °C für vier Stunden gesintert. Es entsteht ein Sinterglaskörper ohne sichtbare Blasen oder Poren.

### Beispiel 6 (gemäß Erfindung)

Ein pyrogen erzeugtes Siliciumdioxid mit einer BET-Oberfläche von 300 m²/g und einer Schüttdichte von 30 g/l und einer Stampfdichte von 50 g/l wird nach DE 196 014 14 A1 verdichtet.

Das verdichtete Siliciumdioxid besitzt eine BET-Oberfläche von 300 m²/g und eine Stampfdichte von 289 g/l.

11,2 g dieses Pulvers werden mit 27 ml dest. Wasser und 2,57 ml Tetramethylammoniumhydroxid zu einer homogenen Dispersion verarbeitet, wie in den Beispielen 1 bis 4 beschrieben. Nach Fertigstellen der Dispersion werden dieser 1 ml Essigsäureethylester zugegeben, und die Dispersion sofort in eine Form gegossen.

Nach 20 Minuten ist die Dispersion geliert. Der entstandene Gelkörper wird nach einer Stunde der Form entnommen und bei Raumtemperatur 7 Tage getrocknet.

Durch die Trocknung entsteht ein mikroporöser Grünkörper.

Dieser wird mittels Zonensinterung unter Vakuum bei 1400°C für vier Stunden gesintert. Es entsteht ein Sinterglaskörper ohne sichtbare Blasen oder Poren.

### Beispiel 7 (gemäß Erfindung)

Ein pyrogen erzeugtes Siliciumdioxid mit einer BET-Oberfläche von 200 m²/g und einer Schüttdichte von 35 g/l und einer Stampfdichte von 50 g/l wird nach DE 196 014 14 A1 verdichtet.

Das verdichtete Siliciumdioxid besitzt eine BET-Oberfläche von 200 m²/g und eine Stampfdichte von 219 g/l.

18 g dieses Pulvers werden im Trockenschrank bei 105 °C 24 Stunden lang getrocknet. Danach wird das Pulver trocken uniaxial zu einen Formkörper mit 10 mm Durchmesser gepreßt.

Die Pressung erfolgt in einer Stahlform mit einem Preßdruck von 51,2 MPa und einer Preßdauer von 90 Sekunden.

Der Formkörper wird in einem Zonensinterofen unter Vakuum bei 1500°C 5 h lang gesintert. Es entsteht ein Sinterglaskörper ohne sichtbare Blasen oder Poren.

## Patentansprüche

1. Sinterwerkstoffe, insbesondere Sintergläser, die mittels eines Formgebungs- oder Verdichtungsverfahrens, ggf. einer anschließenden Reinigung und ggf. einem anschließenden Sinterverfahren hergestellt werden und dadurch gekennzeichnet sind, daß
a) zu ihrer Herstellung pyrogen hergestelltes Siliciumdioxid verwendet wird, das mittels eines nachgeschalteten Verdichtungsschritts gemäß DE 196 01 415 A1 zu Granulaten verdichtet wurde und eine Stampfdichte von 150 g/l bis 800 g/l, eine Granulatkorngröße von 10 bis 800 µm und eine BET-Oberfläche von 10 bis 500 m²/g,
b) zu ihrer Herstellung Granulate nach DE 196 01 415 A1 auf Basis von pyrogen hergestelltem Siliciumdioxid mit den folgenden physikalisch-chemischen Daten verwendet werden:
Mittlerer Korndurchmesser: 25 bis 120 µm, BET-Oberfläche: 40 bis 400 m²/g, Porenvolumen: 0,5 bis 2,5 ml/g, Porenverteilung: keine Poren < 5nm, nur Meso- und Makroporen, pH-Wert: 3,6 bis 8,5, Stampfdichte: 220 bis 700 g/l.

2. Sinterwerkstoffe nach Anspruch 1), dadurch gekennzeichnet, daß die in Anspruch 1) erwähnten Granulate mittels eines Verfahrens der folgenden Art zum Sinterwerkstoff verarbeitet werden:
a) Herstellung einer Dispersion aus 10 Gew.% bis 85 Gew.%, Feststoffanteil der Granulate und einer polaren oder unpolaren anorganischen oder organischen Flüssigkeit, vorzugsweise Wasser, Ethanol oder aliphatische Kohlenwasserstoffe; danach Umfüllen der Dispersion in eine Form oder Beschichtung von Oberflächen mit dieser Dispersion, Einleitung des Gelierens der Dispersion und Trocknung des Gelkörpers oder der gelkörperartigen Beschichtung, wobei der nach dem Trocknungsvorgang entstandene Grünkörper oder die grünkörperartige Beschichtung gegebenenfalls mit gasförmigen Substanzen wie Chlor oder Thionylchlorid bei Temperaturen von 700 bis 1000 °C gereinigt und danach gegebenenfalls durch einen Sinterschritt bei einer Temperatur von 1000 bis 1800 °C so gesintert werden kann, daß der entstehende Sinterkörper oder die Sinteroberfläche völlig dichtgesintert oder noch teilweise porös ist.
b) Einbringen der Granulate ohne Zuhilfenahme einer Flüssigkeit in eine Form oder Aufbringen der Granulate auf eine Oberfläche, anschließend gegebenenfalls ein weiterer Verdichtungsschritt, innerhalb dessen der Formkörper oder die Schicht unter hohem äußerem mechanischen Druck in Gegenwart von Atmosphärendruck oder bei vermindertem Druck verpreßt und weiter verdichtet werden, wobei der nach dem Preßvorgang entstandene Formkörper oder die verdichtete Beschichtung gegebenenfalls mit gasförmigen Substanzen wie Chlor oder Thionylchlorid bei Temperaturen von 700 bis 1000 °C gereinigt und durch einen Sinterschritt bei einer Temperatur von 1000 bis 1800 °C so gesintert werden können, daß der entstehende Sinterkörper oder die Sinteroberfläche völlig dichtgesintert oder noch teilweise porös ist.
c) Aufbringen der Granulate auf Formkörper und Oberflächen durch thermische oder andere hochenergetische Verfahren, innerhalb derer ein fester Formkörper oder eine feste Beschichtung ensteht, und der resultierende Sinterkörper oder die Sinteroberfläche völlig dichtgesintert oder noch teilweise porös ist.

3. Sinterwerkstoffe gemäß Anspruch 1, dadurch gekennzeichnet, daß bei ihrer Herstellung Granulate gemäß Anspruch 1 mittels Einwirkung von thermischer, elektrischer oder elektromagnetischer Energie.
a) vor dem Erhitzen oder im Anschluß daran in eine beliebige Form gebracht und dann so gesintert werden, daß der entstehende Sinterkörper oder die Sinteroberfläche völlig dichtgesintert oder noch teilweise porös ist
b) teilweise oder vollständig aufgeschmolzen werden, vor dem Erhitzen oder im Anschluß daran in eine beliebige Form gebracht werden und in dieser Form erstarren oder zum Beschichten anderer Werkstoffe genutzt werden und gegebenenfalls anschließend nachbehandelt werden.

4. Gläser gemäß den Ansprüchen 1) bis 3) dadurch gekennzeichnet, daß die Sinterung zu einem transparenten Glaskörper oder einer transparenten Glasschicht innerhalb des Viskositätsbereiches des Glases zwischen 10⁸ bis 10¹² dPas erfolgt.

5. Gläser gemäß den Ansprüchen 1) bis 4) dadurch gekennzeichnet, daß die Gläser mindestens wasserbeständig nach der hydrolytischen Klasse 2 sind.

6. Gläser gemäß den Ansprüchen 1) bis 5) dadurch gekennzeichnet, daß die Eigenschaften der aus entsprechenden, feinsten Pulverteilchen gesinterten oder erschmolzenen Gläser übereinstimmend sind mit den Eigenschaften eines Glases mit identischer chemischer Zusammensetzung, welches über einen konventionellen Schmelzprozeß ohne die Verwendung der Granulate gemäß Anspruch 1) hergestellt wurde, wobei die Herstellung derartiger Sintergläser deutlich niedrigere Sintertemperaturen, verglichen mit der Schmelztemperatur, die zur Herstellung eines Glases mit identischer Zusammensetzung innerhalb eines konventionellen Schmelzprozesses benötigt wird, erfordert.

7. Dispersionen durch folgende Eigenschaften gekennzeichnet:
a) Feststoffanteile von Granulaten nach Anspruch 1) von 10 Gew.% bis 85 Gew.% innerhalb einer Dispersion mit einer polaren oder unpolaren anorganischen oder organischen Flüssigkeit.
b) Feststoffanteile von Granulaten nach Anspruch 1) von 10 Gew.% bis 85 Gew.% innerhalb einer wäßrigen Dispersion, die einen pH-Wert zwischen pH = 1 und 6 oder zwischen pH = 8 und 12 besitzt und auf den entsprechenden pH-Wert eingestellt wird mit organischen Säuren mit anorganischen Säuren mit organischen Basen und mit anorganischen Basen.
c) Feststoffanteile von Granulaten nach Anspruch 1) von 10 Gew.% bis 85 Gew.%, innerhalb einer wäßrigen Dispersion, die einen pH-Wert zwischen pH = 1 und 6 oder zwischen pH = 8 und 12 besitzt und auf den entsprechenden pH-Wert eingestellt wird mit organischen oder anorganischen Säuren oder Basen und weitere Zusatzstoffe enthält, die erhöhte Granulatanteile und eine verbesserte Dispergierbarkeit ermöglichen, die zu einer sterischen oder ionischen Stabilisierung der Dispersion beitragen und ein Absetzen von Feststoffanteilen verringern oder unterbinden und / oder ein vorzeitiges Gelieren verhindern.
d) Feststoffanteile von Granulaten nach Anspruch 1) von 10 Gew.% bis 85 Gew.% innerhalb einer wäßrigen Dispersion, die einen pH-Wert zwischen pH = 1 und 6 oder zwischen pH = 8 und 12 besitzt und auf den entsprechenden pH-Wert eingestellt wird mit organischen oder anorganischen Säuren oder Basen und weitere Zusatzstoffe enthalten kann, die ein verbessertes Dispergieren, Gelieren, Trocknen und Reinigen sowie Sintern des späteren Sinterwerkstoffes ermöglichen, wobei derartige Dispersionen auch mit anderen organischen Bindermaterialien versetzt werden können, die ebenfalls eine verbesserte Produktqualität des Sinterwerkstoffes ermöglichen
e) Feststoffanteile von Granulaten nach Anspruch 1) von 1 Gew.% bis 75 Gew.% innerhalb einer wäßrigen Dispersion, die einen pH-Wert zwischen pH = 1 und 6 oder zwischen pH = 8 und 12 besitzt und auf den entsprechenden pH-Wert eingestellt wird mit organischen oder anorganischen Säuren oder Basen und gegebenenfalls weitere Zusatzstoffe enthalten kann, wobei derartigen Dispersionen pyrogen erzeugte Oxide in einem Gewichtsanteil von 1 bis 65 Gew.%, zugesetzt werden können und die entsprechenden pyrogenen Oxide der Dispersion sowohl unverdichtet als auch nach Durchführung einer andersartigen Vorverdichtung zugesetzt werden können, als in DE 196 01 415 A1 beschrieben.
f) Feststoffanteile von Granulaten nach Anspruch 1) von 1 Gew.% bis 75 Gew.%, innerhalb einer wäßrigen Dispersion, die einen pH-Wert zwischen pH = 1 und 6 oder zwischen pH = 8 und 12 besitzt und auf den entsprechenden pH-Wert eingestellt wird mit organischen oder anorganischen Säuren oder Basen und weitere Zusatzstoffe enthalten kann, die ein verbessertes Dispergieren, Gelieren, Trocknen und Reinigen sowie Sintern des späteren Sinterwerkstoffes ermöglichen, wobei derartige Dispersionen erfindungsgemäß mit Salzen oder Oxiden eines Metalloids und/oder Metalls versetzt werden können.

8. Verwendung von Granulaten aus pyrogen erzeugtem Siliciumdioxid zur Herstellung von Sinterwerkstoffen, insbesondere Sintergläsern gemäß Anspruch 1), dadurch gekennzeichnet, daß die eingesetzten Granulate folgende Eigenschaften besitzen:
a) die Granulate besitzen nach einem nachgeschalteten Verdichtungsschritt gemäß DE 196 01 415 A1 eine Stampfdichte von 150 g/l bis 800 g/l, eine Granulatkorngröße von 10 bis 800 µm und eine BET-Oberfläche von 10 bis 500 m²/g,
b) die Granulate nach DE 196 01 415 A1 auf Basis von pyrogen hergestelltem Siliciumdioxid folgende physikalisch-chemische Daten besitzen: Mittlerer Korndurchmesser: 25 bis 120 µm, BET-Oberfläche: 40 bis 400 m²/g, Porenvolumen: 0,5 bis 2,5 ml/g, Porenverteilung: keine Poren < 5nm, nur Meso- und Makroporen, pH-Wert: 3,6 bis 8,5, Stampfdichte: 220 bis 700 g/l.

9. Verfahren zur Herstellung von Sinterwerkstoffen insbesondere Sintergläsern nach Anspruch 1), dadurch gekennzeichnet, daß man pyrogen hergestelltes Siliciumdioxid auf bekanntem Wege verdichtet und / oder granuliert, in eine Dispersion überführt, die Dispersion geliert, trocknet, den entstehenden Grünkörper gegebenenfalls reinigt sowie anschließend sintert.

10. Verfahren zur Herstellung von Sinterwerkstoffen insbesondere Sintergläsern nach Anspruch 1), dadurch gekennzeichnet, daß man pyrogen hergestelltes Siliciumdioxid auf bekanntem Wege verdichtet und / oder granuliert, und danach:
a) die Granulate gemäß Anspruch 1) ohne Zuhilfenahme einer Flüssigkeit in eine Form einbringt oder auf eine Oberfläche aufbringt, anschließend ggf. einen weiteren Verdichtungsschritt vornimmt, innerhalb dessen der Formkörper oder die Schicht unter hohem äußerem mechanischen Druck in Gegenwart von Atmosphärendruck oder bei vermindertem Druck verpreßt und weiter verdichtet werden, wobei der nach dem Preßvorgang entstandene Formkörper oder die verdichtete Beschichtung kann gegebenenfalls mit gasförmigen Substanzen wie Chlor oder Thionylchlorid bei Temperaturen vonn 700 bis 1000 °C gereinigt und durch einen Sinterschritt bei einer Temperatur von 1000 bis 1800 °C, vorzugsweise von 1100° bis 1600°C so gesintert werden können, daß der entstehende Sinterkörper oder die Sinteroberfläche völlig dichtgesintert oder noch teilweise porös ist.
b) Granulate gemäß Anspruch 1) auf Formkörper und Oberflächen durch thermische oder andere hochenergetische Verfahren aufbringt, wobei ein fester Formkörper oder eine feste Beschichtung ensteht und der resultierende Sinterkörper oder die Sinteroberfläche völlig dichtgesintert oder noch teilweise porös ist.
c) die in Anspruch 1) erwähnten Granulate mittels Einwirkung von thermischer, elektrischer oder elektromagnetischer Energie entweder vor dem Erhitzen oder im Anschluß daran in eine beliebige Form bringt und dann so sintert, daß der entstehende Sinterkörper oder die Sinteroberfläche völlig dichtgesintert oder noch teilweise porös ist oder aber die Granulate teilweise oder vollständig aufschmilzt, diese vor dem Erhitzen oder im Anschluß daran in eine beliebige Form bringt und in dieser Form erstarren läßt oder zum Beschichten anderer Werkstoffe nutzt und sie gegebenenfalls anschließend nachbehandelt.

11. Verwendung von Sinterwerkstoffen insbesondere Sintergläsern oder Gläsern entsprechend den Ansprüchen 1) bis 6) für die Herstellung von Glasformkörpern.

12. Verwendung von Sinterwerkstoffen insbesondere Sintergläsern oder Gläsern zum Beschichten von anderen Werkstoffen.

13. Verwendung von Sinterwerkstoffen insbesondere Sintergläsern oder Gläsern entsprechend den Ansprüchen 1) bis 6)zum Herstellen von faserigen Werkstoffen oder Fasern.

14. Verwendung von Granulaten entsprechend Anspruch 1) für die Herstellung von Gläsern, insbesondere Sintergläsern, Keramiken, Verbundwerkstoffen, innerhalb derer die Granulate als Verstärkerfüllstoff wirken, als Verstärkerfüllstoffe in Metallen, Gläsern, Polymeren, Elastomeren, Lacken oder Flüssigkeiten.

15. Verwendung von Dispersionen entsprechend den Ansprüchen 2) und 7) für die Herstellung von Gläsern, insbesondere Sintergläsern entsprechend den Ansprüchen 1) bis 6) sowie zum Polieren von Halbleitermaterialien oder elektrischen Schaltkreisen.
